Europäisches Patentamt

European Patent Office

Office européen des brevets

(19)

(11) Publication number : **0 624 551 A1**

# (12) EUROPEAN PATENT APPLICATION

(21) Application number : 94303026.2

(22) Date of filing : 27.04.94

(51) Int. Cl.$^5$ : **C01F 17/00, C02F 1/58, C02F 1/28**

(30) Priority : **07.05.93 KR 9307839**

(43) Date of publication of application :
**17.11.94 Bulletin 94/46**

(84) Designated Contracting States :
**DE FR GB**

(71) Applicant : **LUCKY METALS CORPORATION
20 Yoido - dong,
Youngdungpo - Ku
Seoul (KR)**

(72) Inventor : **Hong, Young Ho
Shindonga Apt. 7-1201
Bangbae-dong Socho-ku Seoul (KR)**
Inventor : **Roh, Jae Ho
665-6, Jayang 2-dong
Sungdong-ku Seoul (KR)**
Inventor : **Mo Woo, Sang
Olympic Sunsoochon Apt. 217-501
Bangi-dong Songpa-ku Seoul (KR)**

(74) Representative : **Cross, Rupert Edward Blount
et al
BOULT, WADE & TENNANT
27 Furnival Street
London EC4A 1PQ (GB)**

(54) **Method for the re-treatment of residue generated from the removal of fluorine dissolved in waste water.**

(57) A method for the re-treatment of residue generated in the course of removing fluorine from waste water.

The method comprises the step of : obtaining rare earth fluorides from the residue which is generated in the course of treating the waste water with a rare earth compound to remove fluorine ions from the waste water ; and heat treating the rare earth fluorides at temperatures ranging from approximately 400 to approximately 1,300 °C for times ranging from approximately 0.5 to approximately 15 hours, after drying the rare earth fluorides.

The invention pertains to the reuse of rare earth elements used in the treatment of fluorine. Products obtained by carrying out the method contain rare earth oxides, rare earth fluorides and rare earth oxyfluorides alone and the mixture thereof, which are useful as materials for general abrasive and as adding agents for T.V. Braun tube or for glass valve.

FIG. 1

$LnF_3 nH_2O$

→ dried

→ heat—treated

→ $Ln_x O_y . LnOF . LnF_3$

⋮ → selective leaching

⋮ → $Ce \cdot refined$

## BACKGROUND OF THE INVENTION

The present invention relates, in general, to a treatment method for reusing fluorine-treated residue and, more particularly, to a method for re-treating with rare-earth compounds residue which is generated in the course of removing dissolved fluorine ions from waste water, so as to reuse the residue.

In the natural world, there exists a trace amount of fluorine by nature, for instance, about 1.2 to 1.4 ppm. This trace amount of fluorine does not cause any problems in view of ecological environment. Now, the use of fluorine or fluorine-containing compounds, however, is extensively increased as various industries, such as electromagnetic, metallic, chemical or ceramic industries, have been rapidly developed. For example, fluorine or fluorine-containing compounds are used for manufacturing semiconductors, washing the interior of a cathode ray tube, manufacturing aluminum, and etc.

Waste water released from a plant pertaining to the industries contains fluorine which is in a free radical state or combined state, and the concentration of fluorine in the waste water often comes to several hundreds ppm, which is very dangerous in view of ecology, affecting human bodies, animals or plants detrimentally. Accordingly, it is required to lower the concentration of the fluorides in the waste water.

In an effort to lower the concentration of fluorine in the waste water, there has been proposed such a method for treating the fluorine-containing waste water that at least one species selected from a calcium compound, e.g. $Ca(OH)_2$, an aluminum compound, e.g. $Al_2(SO_4)_3$ and a phosphoric acid compound is added to the waste water, so as to insolubilize the fluorine ions, and the resulting supernatant and sludge is separated.

However, the above conventional method is problematic in that a good deal of chemical reagents are needed, generating a great amount of sludge. Even though this generated sludge is buried, fluorides are eluted therefrom, so that a plenty of alkaline chemical reagents necessary to neutralize the fluorides are demanded. What is still worse, this conventional method is not so effective to the removal of the fluorine.

In order to solve the problems, rare earth compounds have recently been used as fluorine-removing agents, in lieu of calcium oxide $(Ca(OH)_2)$ or aluminum sulfate $(Al_2(SO_4)_3)$. Rare earth elements along with fluorine form rare-earth fluorides, very stable compounds. Since these rare-earth fluorides formed are very insoluble, there is brought about an excellent effect on removing the fluorine dissolved in the waste water. In addition, the use of rare earth compounds is characterized by the fact that only a small amount of residue is generated after the treatment by virtue of the insolubility of the rare-earth fluorides.

Rare earth ore is grouped into bastnasite, monazite and xenotime. Bastnasite consists of a type of $LnCO_3F$ wherein Ln is a general term for representing rare earth elements, such as La, Ce, Pr and the like, whereas monazite and xenotime each consists of a type of $LnPO_4$.

Taking account into economy, the use of monazite or xenotime is improper due to its content of high-priced elements. For instance, thorium (Th) is contained in amounts ranging from 5 to 10 % by weight in monazite and other high-priced rare-earth elements are contained in xenotime. In addition, such ores have elements unsuitable to remove fluorine ions, so that the fluorides thereof have larger solubilities than light rare earth elements have. Therefore, in advance of using these ores, there must be carried out such a treatment that the unsuitable elements are removed therefrom, which is one factor of cost increase.

It is very difficult to reduce the treatment cost to a certain level. For example, even though the amount of the rare earth element can be reduced considerably as a result of intensive studies, it is impossible to cut down the amount thereof unlimitedly since it must be basically used in an amount of not less than equivalent weight and the amount of the removed fluorides is proportional to its amount used. The cost of manufacturing articles is raised according to the use of the high-priced rare earth elements for removing the fluorine contained in waste water and to the augmentative amount thereof. Accordingly, it is economically unadvantageous unless the reuse of the rare earth elements is accompanied by re-treating the residue which is generated in the course of removing fluorine from waste water.

Japanese Patent Laid-Open Publication No. Sho. 61-192385 (hereinafter, referred to as "the prior art") discloses that the rare earth elements can be reused by contacting an insoluble rare earth compound with waste water to absorb fluorine or fluorine-containing compounds, detaching the absorbed fluorine with an alkaline solution and recovering rare earth elements in the forms of insoluble rare earth compounds and alkaline fluorides.

However, the prior art utilizing an alkaline solution has many difficulties. First, the dependance of alkaline solution on ion exchange reaction could cause poor reaction efficiency. In addition, after the detaching, pH is required to be lowed by neutralizing the eluting solution. Further, when the generated alkaline fluorides are treated with $Ca(OH)_2$, a great deal of $CaF_2$ residue is formed, so that the fluorine of above a certain concentration ($CaF_2$ solubility 8 mg/e) always remains in the solution. Furthermore, because the detaching solution has to be added with a precipitating agent, treating agents are to be used in a great quantity. Accordingly, the prior art is disadvantageous in that its processes are intricate and uneconomical.

In particular, the prior art says, in detail, only about recovering the alkaline solution for reuse but does not disclose qualities according to the recovery of rare-earth compounds and related technical contents.

By contrast with re-treatment methods utilizing soluble rare earth compounds to remove fluorine from the waste water, re-treatment methods utilizing soluble rare earth compounds still have not been established.

## SUMMARY OF THE INVENTION

Based on intensive and through study for the effective treatment of the residue generated in the course of removing fluorine ions from waste water by the present inventors, the invention comes to be proposed.

It is, therefore, an object of the present invention to provide a method for the re-treatment of the residue generated when treating waste water with a rare earth compound, superior in effectiveness.

It is another object of the present invention to provide a method for the re-treatment of the residue generated when treating waste water with a rare earth compound, capable of utilizing both soluble and insoluble rare earth compounds.

It is a further object of the present invention to provide a method for the re-treatment of the residue generated when treating waste water with a rare earth compound, capable of recovering the rare earth elements in simple and economy.

According to the present invention, the above objects could be accomplished by providing a method for re-treating fluorine-treated residue of waste water, comprising the step of:obtaining rare earth fluorides from the residue, said residue being generated in the course of treating the waste water with a rare earth compound to remove fluorine ions from the waste water; and heat treating the rare earth fluorides at temperatures ranging from approximately 400 to approximately 1,300 °C for times ranging from approximately 0.5 to approximately 15 hours, after drying the rare earth fluorides.

## BRIEF DESCRIPTION OF THE DRAWINGS

The above objective and other advantages of the present invention will become more apparent by describing in detail the preferred embodiment of the present invention with reference to the attached drawings in which:

Fig. 1 is a block diagram showing the flow of the method according to the present invention;

Fig. 2 is an X-ray diffraction spectrum of the rare earth fluoride dried at 100 °C;

Fig. 3 is X-ray diffraction spectra of the rare earth fluorides calcined at 1,000 °C for different times according to the present invention;

Fig. 4A is an entire X-ray diffraction spectrum of refined Ce ore according to the present invention;

Fig. 4B is an enlarged view of part a of Fig. 4A;

Fig. 4C is an enlarged view of part b of Fig. 4A;

Fig. 5 is X·ray diffraction spectra of the rare earth fluorides calcined at 800 °C for different times according to the present invention;

Fig. 6 is X·ray diffraction spectra of the rare earth fluorides calcined at 800 °C for different times according to the present invention;

Fig. 7 is an X·ray diffraction spectrum of fluorine-treated residue from an electric company; and

Fig. 8 is an X-ray diffraction spectrum of the fluorine-treated residue of Fig. 7 which is calcined according to the present invention.

These and other objects and advantages of the present invention will be more apparent as following description proceeds.

## DETAILED DESCRIPTION OF THE INVENTION

Rare earth has been utilized for a variety of purposes since its characteristic electromagnetic properties were discovered. For example, it is used as a deoxidizer or a seeding agent in steel industry, an agent for manufacturing a glass valve for T.V. Braun tube, a fluorescent, an abrasive, a catalyst, a permanent magnet, a ceramic material and etc. The rare earth used as the above purposes mainly consists of light rare earth elements, such as Ce, La and the like, which has a composition similar to that of a fluorine-treating agent employing light rare earth elements.

The present invention pertains to the reuse of the residue which is generated by treating waste water with a rare earth compound to remove the fluorine ions contained the water. In the present invention, the residue is subjected to heat treatment and acid treatment, and turned into a useful material which can be applied to a material for glass abrasive or for glass valve for a T.V. Braun tube, like refined Ce ore.

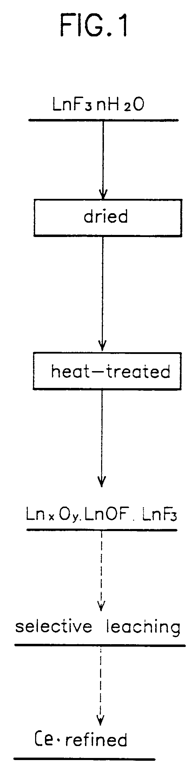

In order to turn the rare earth fluorides resulting from removing the dissolved fluorine ions with rare earth compounds into rare earth oxides, as shown in Fig. 1, the treated residue first is dried, and heated at high temperatures in oxidative ambient to decompose the rare earth fluorides into a form of rare earth oxides, rare earth oxyfluorides or rare earth fluorides alone, or mixtures thereof. Following this, the heat-treated form may be further subjected to leaching with an acid, so as to remove rare earth elements or precipitated elements other than cerium from waste water in such a way to concentrate cerium. As a result, there is obtained refined cerium ore. The residue resulting from the removal of fluorine by use of rare earth compounds most exists in the form of rare earth fluoride. Rare earth exceeding equivalent may exist as rare earth oxides or partially as rare earth phosphoric acid salts combined with $PO_4$ of waste water.

According to the method of the present invention, the rare earth fluoride which belongs to the residue resulting from the treatment of waste water with a rare earth compound is dried at about 100 °C in the air or under a reduced pressure. The drying time is not of critical importance, and the rare earth fluoride dried so enough as not to cause inconvenience in subsequent processes would be sufficient.

The rare earth fluoride free of absorbed water, a dried product, if necessary, can be broken down into pieces which, in turn, are put in a crucible and calcined at temperatures ranging from 400 to 1,300 °C and preferably from 800 to 1,000 °C. For example, if it is calcined at below 400 °C, which causes the rare earth fluoride to be crystallized, an oxidation reaction by air, that is, the reaction of rare earth fluorides into rare earth oxides and rare earth oxyfluorides is weak. On the other hand, if the calcination temperature is above 1,300 °C, the rare earth fluoride is melted.

In accordance with the present invention, the calcination is carried out for from approximately 0.5 to approximately 15 hours and preferably from 2 to 7 hours. This calcination time may be somewhat varied because the difference of the content of fluorine can be allowed according to the furnace used.

It is known that the calcination at high temperatures makes the rare earth fluorides to be decomposed into rare earth oxides and rare earth oxyfluorides. As the rare earth fluorides are decomposed, the content of fluorine in the product decomposed is gradually varied according to the temperature and time.

A material having the same composition as the decomposed product according to the present invention can be a material for general glass abrasive.

In accordance with the present invention, the decomposed product can be utilized as refined cerium ore containing at least 60 % of cerium oxide by oxidizing the rare earth fluoride. For this, the product passing through the calcination is subjected to selective leaching by use of an inorganic acid, to remove rare earth elements other than cerium. The inorganic acid used in the present invention may include a hydrochloric acid, a nitric acid and a sulfuric acid and preferably a hydrochloric acid. Hydrochloric acid used in the present invention has 1.5 to 20 % concentration, and the concentration may be properly controlled according to the ratio of the oxides to fluorides.

In order to better understand the nature of the present invention, a number of examples will now be described.

## EXAMPLE 1

Rare earth fluorides, the dissolved fluorine-treated residue, were treated as follows.

A fluorine-containing compound, such as calcium fluoride, ammonium fluoride or fluoric acid, was dissolved in water and added with a rare earth chloride solution, a treating agent for dissolved fluorine. After being stirred, the resulting solution was subjected to general supernatant separation and dried at 100 °C for 48 hours, to produce rare earth fluorides.

These rare earth fluorides were calcined in a furnace keeping 1,000 °C in an ambient in which air freely flows, for from 2 to 7 hours, so as to decompose them into a phase of rare earth oxides represented as an empirical formula $Ln_xO_y$ wherein x=1 and y=2 when Ln is Ce, x=6 and y=11 when Ln is Pr, x=4 and y=7 when Ln is Tb, and x=2 and y=3 when Ln is one selected from the group consisting of La, Nd, Sm, Eu, Gd, Dy, Ho, Er, Tm, Yb and Lu, rare earth oxyfluorides and rare earth fluorides alone, or mixtures thereof.

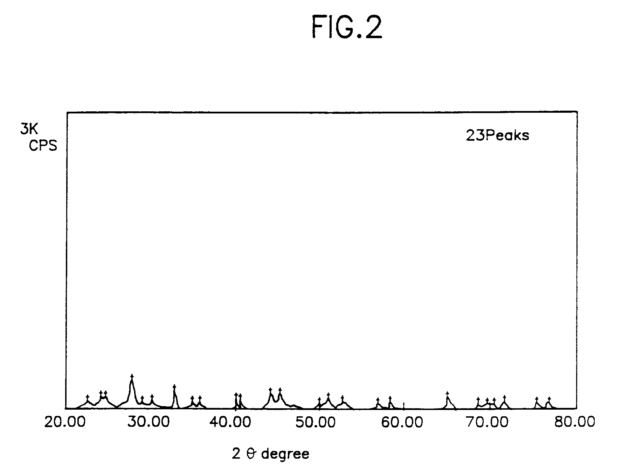

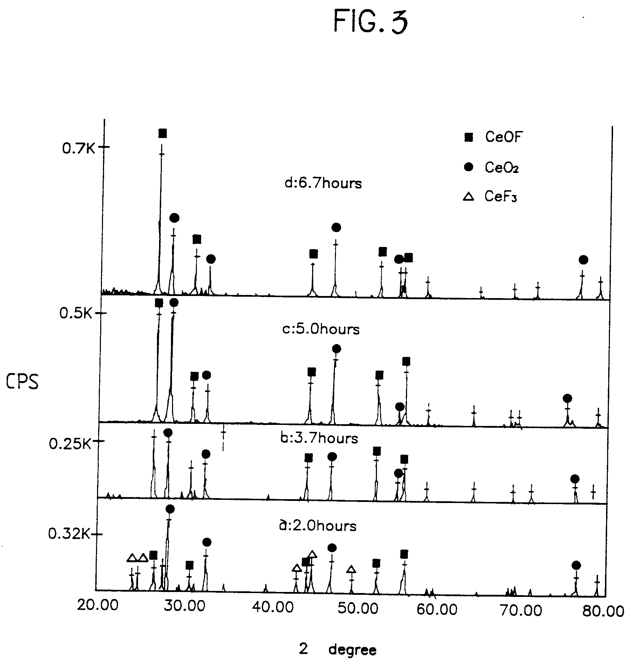

Referring to Figs 2 and 3, there are X-ray spectra for the products obtained by the dry and calcination. While Fig. 2 is an X-ray spectrum for the rare earth fluorides obtained just after the drying, Fig. 3 shows X-ray spectrum results according to the calcination time.

As the calcination time is lengthened, the peaks showing the characteristics of the rare earth fluoride become split, as shown in Fig. 3. For example, the calcination carried out for 2.0 hours gave a product mixture of rare earth fluorides, rare earth oxides and rare earth oxyfluorides, and all the rare earth fluorides calcined for 3.7 hours are decomposed, so that the product is obtained in the form of rare earth oxides and rare oxyfluorides.

Chemical compositions of the products obtained according to the method of the present invention are shown in the following Table 1, in which the rare earth fluoride subjected to drying only and products resulting from the calcination are compared with abrasives A and B for optical glass, and with refined cerium ore, used as an agent for producing a glass valve.

## Table 1

| Material | Total $Ln_2O_3$ | $CeO_2$ | $La_2O_3$ | $Nd_2O_3$ | $Pr_6O_{11}$ | F |
|---|---|---|---|---|---|---|
| $LnF_3$ (only dried at 100°C) | 80.1 | 42.5 | 20.8 | 13.2 | 3.6 | 25.9 |
| Calcined Product (for 2 hr.) | 85.7 | 44.7 | 23.2 | 14.2 | 3.6 | 13.6 |
| Calcined Product (for 5 hr.) | 96.3 | 50.4 | 25.9 | 16.0 | 4.0 | 8.5 |
| Abrasive A[*] | 72.8 | 57.8 | 10.6 | 3.2 | 1.3 | 8.7 |
| Abrasive B[**] | 88.6 | 50.7 | 25.5 | 9.2 | 3.2 | 7.4 |
| Refined Ce Ore[***] | 68 min | 60 < | 4-6 | 1-2 | 0.1-1 | 8-10 |

[*] made in USA.
[**] made in Japan.
[***] made in USA.

As apparent from the Table 1, the products according to the present invention and abrasives A and B are alike in total rare earth contents, so that the products can be used as materials for general abrasive.

In addition, refined Ce ore, used as an adding agent for T.V. Braun tube or for glass valve, which comprises a mixture consisting of rare earth oxides, rare earth fluorides and rare earth oxyfluorides has a composition similar to that of the decomposed products according to the present invention. Accordingly, the products, if necessary, can be utilized as a substitute for the refined cerium ore by applying a selective leaching process using an inorganic acid, preferably hydrochloric acid, to the products to deprive the products of rare earth element other than cerium to such a degree that the product should have not less than 60 % of cerium oxide.

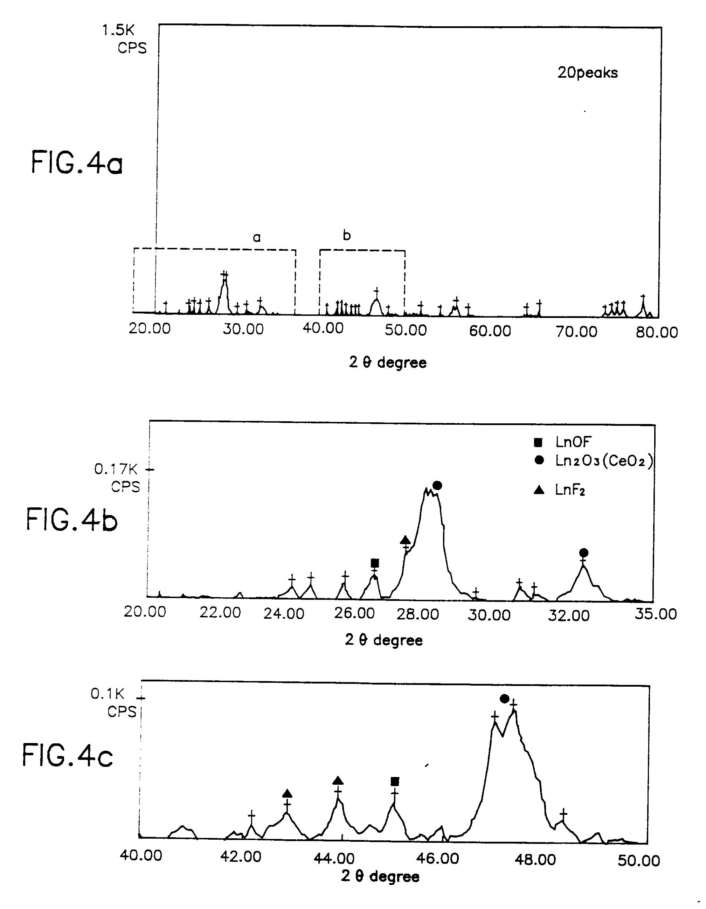

Referring now to Figs. 4A to 4C, there are X-ray spectra for the refined cerium ore treated with acid, according to the present invention. Fig. 4A shows the entire spectrum for the refined cerium ore, whereas Fig. 4B and 4C are enlarged views showing the spectrum partially in parts a and b corresponding to 20 to 35° and 40 to 50° of 2θ, respectively.

## EXAMPLES 2 AND 3

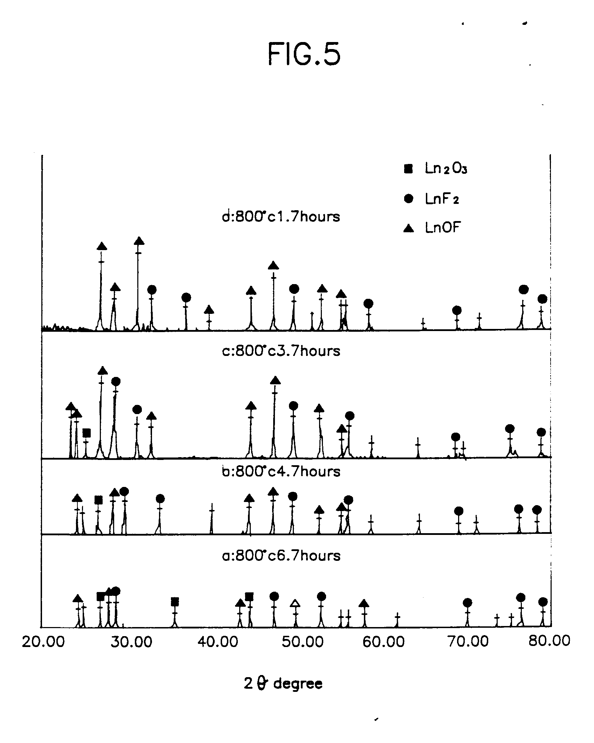

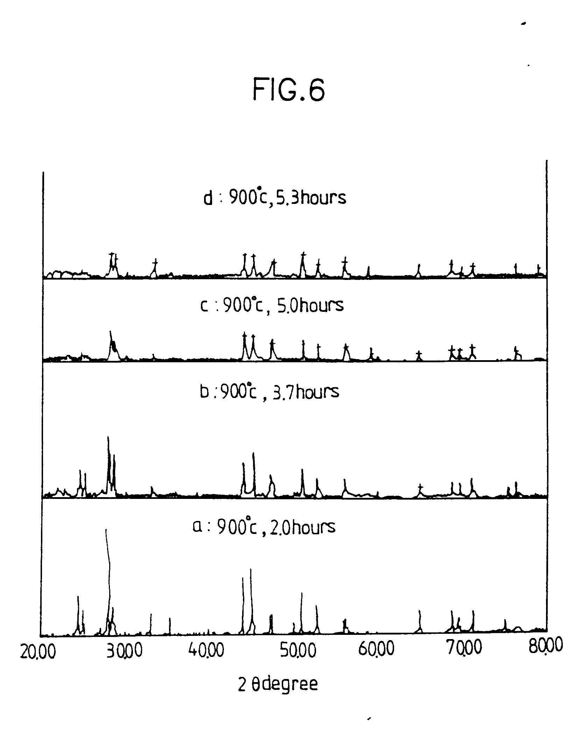

Products were prepared in a manner similar to that of Example 1, except that the calcination for the dried rare earth fluoride was carried out at 800 °C and 900 °C for the times indicated in figures 5 and 6.

The decomposition of the rare earth fluorides into rare earth oxides, rare earth fluorides and rare earth oxyfluorides could be ascertained by the results of X-ray spectrum, which are shown in Fig. 5 and 6.

## EXAMPLE 4

Rare earth fluorides, the residue formed in the course of removing dissolved fluorides from a waste water released from an electric company of Korea, were treated.

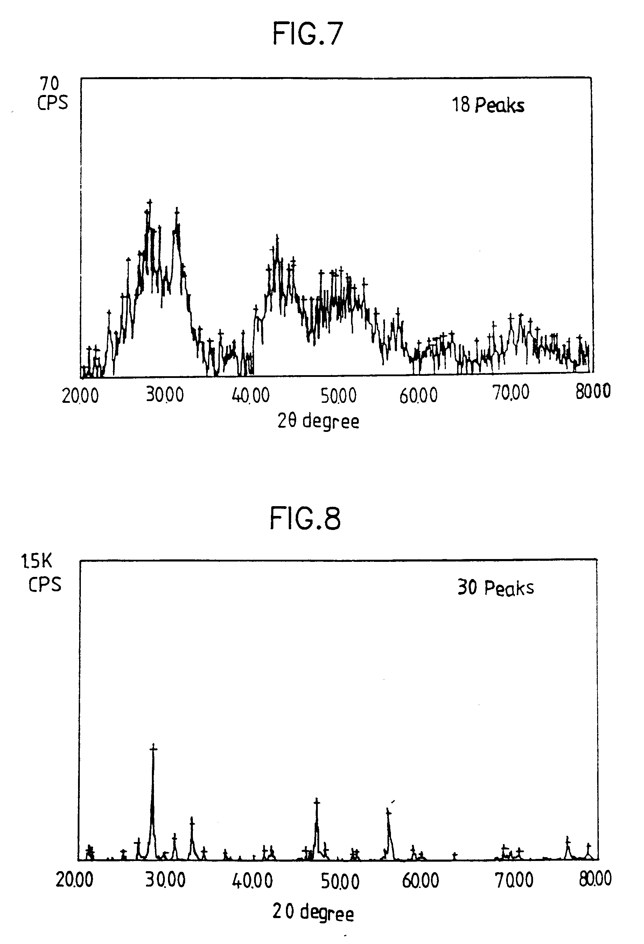

After being treated, the waste water came to contain fluorine in a concentration of 10 mg/l while, before the treatment, it contains in a concentration 50 mg/l. At this time, rare earth compounds were added and most remained rare earth fluorides. However, among the rare earth compounds which were added in an amount of more than equivalent, as much as the exceeding equivalent of the rare earth existed as rare earth hydroxides, which are represented in an X-ray diffraction spectrum of Fig. 7.

Those which had already been as rare earth hydroxides were readily transformed into the form of rare earth oxides when applying a calcination process. On the other, depending on calcination temperature, those that had existed as rare earth fluorides were gradually transformed into rare earth oxides, rare earth oxyfluorides.

Fig. 8 is an X-ray diffraction spectrum of a product which were prepared by calcining the rare earth fluorides in a furnace keeping 1,000 °C for 2 hours.

Chemical composition of a product having undergone the calcination is given as shown in the following Table 2.

Table 2

| | | | | | unit : wt% |
|---|---|---|---|---|---|
| Material | Total $Ln_2O_3$ | $CeO_2$ | $La_2O_3$ | $Nd_2O_3$ | $Pr_6O_{11}$ | F |
| Product | 80.1 | 42.5 | 20.8 | 13.2 | 3.6 | 25.9 |

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

## Claims

1. A method for re-treating fluorine-treated residue of waste water, comprising the step of:
   obtaining rare earth fluorides from the residue, said residue being generated in the course of treating the waste water with a rare earth compound to remove fluorine ions from the waste water; and
   heat treating the rare earth fluorides at temperatures ranging from approximately 400 to approximately 1,300 °C for times ranging from approximately 0.5 to approximately 15 hours, after drying the rare earth fluorides.

2. A method according to Claim 1, wherein the temperature is on the order of approximately 800 to 1,000 °C.

3. A method according to Claim 2, wherein the time is on the order of approximately 2 to approximately 7 hours.

4. A method according to any one of Claims 1 to 3, wherein the residue is decomposed into rare earth oxides, rare earth oxyfluorides and rare earth fluorides alone or the mixture of thereof.

5. A method according to any one of Claims 1 to 3, further comprising the step of leaching the heat-treated rare earth fluorides the with an acid to grade up the quality of the rare earth oxide.

6. A method according to Claim 5, wherein the acid is an inorganic acid.

7. A method according to Claim 6, wherein the inorganic acid is 1.5 to 20 % hydrochloric acid.

# FIG.1

$$LnF_3 n H_2O$$

```
       ↓
   ┌─────────┐
   │  dried  │
   └─────────┘
       ↓
 ┌──────────────┐
 │ heat-treated │
 └──────────────┘
       ↓
```

$$Ln_x O_y. LnOF. LnF_3$$

selective leaching

Ce·refined

# FIG.2

# FIG.3

FIG.4a

FIG.4b

FIG.4c

# FIG.5

# FIG.6

d : 900°c, 5.3hours

c : 900°c, 5.0hours

b : 900°c , 3.7hours

a : 900°c , 2.0hours

20.00    30.00    40.00    50.00    60.00    70.00    80.00

2 θ degree

## FIG.7

70 CPS

18 Peaks

2θ degree

## FIG.8

15K CPS

30 Peaks

2θ degree

EP 0 624 551 A1

**European Patent Office**

# EUROPEAN SEARCH REPORT

Application Number
EP 94 30 3026

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PATENT ABSTRACTS OF JAPAN vol. 7, no. 155 (C-175) 7 July 1958 & JP-A-58 067 836 (TANAKA AKIRA) 22 April 1983 --- | 1,5,6 | C01F17/00 C02F1/58 C02F1/28 |
| A | GB-A-1 252 424 (MAURICE DAWSON ET AL.) * the whole document * --- | 1,5-7 | |
| D,A | PATENT ABSTRACTS OF JAPAN vol. 11, no. 18 (C-398) (2465) 17 January 1987 & JP-A-61 192 385 (ASAHI CHEM.IND.CO.LTD.) 26 August 1986 * abstract * ----- | 1 | |
| | | | **TECHNICAL FIELDS SEARCHED** (Int.Cl.5) |
| | | | C02F C01F |

The present search report has been drawn up for all claims

| Place of search | Date of completion of the search | Examiner |
|---|---|---|
| THE HAGUE | 16 August 1994 | Teply, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14